# EUROPEAN PATENT APPLICATION

(11) **EP 4 560 357 A1**
(43) Date of publication of application: **28.05.2025**
(21) Application number: 23842151.5
(22) Date of filing: 11.07.2023
(51) Int. Cl.: G01S 17/931, G01S 7/481

(54) **LIDAR SYSTEM, CONTROL METHOD AND APPARATUS, AND VEHICLE**

(30) Priority: 21.07.2022 CN 202210873651
(71) Applicant: Shenzhen Yinwang Intelligent Technologies Co., Ltd., Shenzhen, Guangdong 518129 (CN)
(72) Inventor: PENG, Xu, Shenzhen, Guangdong 518129 (CN); LI, Wenguang, Shenzhen, Guangdong 518129 (CN); WANG, Xiaoming, Shenzhen, Guangdong 518129 (CN); FAN, Weiwei, Shenzhen, Guangdong 518129 (CN)
(74) Representative: Körber, Martin Hans
(86) International application number: PCT/CN2023/106673
(87) International publication number: WO 2024/017086

(57) **Abstract**

Embodiments of this application provide a lidar system, a control method, an apparatus, and a vehicle. The lidar system includes a first lidar, and a first flip component, configured to connect the first lidar to a first side of a vehicle. When the first flip component flips to a first position, the first lidar is configured to sense an environment in a first direction; or when the first flip component flips to a second position, the first lidar is configured to sense an environment in a second direction. The technical solutions in embodiments of this application may be applied to an intelligent vehicle or an electric vehicle. This helps reduce vehicle costs while improving vehicle safety.

## Description

This application claims priority to Chinese Patent Application No. 202210873651.6, filed with the China National Intellectual Property Administration on July 21, 2022 and entitled "LIDAR SYSTEM, CONTROL METHOD, APPARATUS, AND VEHICLE", which is incorporated herein by reference in its entirety.

### TECHNICAL FIELD

Embodiments of this application relate to the field of intelligent driving, and more specifically, to a lidar system, a control method, an apparatus, and a vehicle.

### BACKGROUND

With the development of society and the progress of science and technology, vehicles are gradually entering people's daily lives. Environment sensing is an important part of automatic driving and intelligent driving of a vehicle, and is also an important guarantee for safety and intelligence of the vehicle. A vehicle usually senses an environment and measures a target by using sensors such as millimeter-wave radar, lidar (LiDAR), ultrasonic radar, and cameras, for example, measures positions of, distances to, and speeds of targets.

Lidar has high confidence and plays an increasingly important role in automatic driving. Currently, lidar for a vehicle is usually disposed on a front side of the vehicle (for example, on a front bumper). A blind area caused by lidar in a traveling process of the vehicle affects ambient environment sensing of the vehicle, thereby affecting vehicle safety. If vehicle safety needs to be improved, a plurality of lidars need to be disposed on the vehicle. This causes excessively high costs of the vehicle.

### SUMMARY

Embodiments of this application provide a lidar system, a control method, an apparatus, and a vehicle, to help reduce vehicle costs while improving vehicle safety.

The vehicle in this application is a vehicle in a broad sense, and may be a transportation means (for example, a commercial vehicle, a passenger vehicle, a motorcycle, an aerocar, or a train), an industrial vehicle (for example, a forklift truck, a trailer, or a tractor), an engineering vehicle (for example, an excavator, a bulldozer, or a crane), an agricultural device (for example, a mower or a harvester), a recreational device, or a toy vehicle. A type of the vehicle is not specifically limited in embodiments of this application.

According to a first aspect, a lidar system is provided. The lidar system includes a first lidar, and a first flip component, configured to connect the first lidar to a first side of a vehicle. When the first flip component flips to a first position, the first lidar is configured to sense an environment in a first direction; or when the first flip component flips to a second position, the first lidar is configured to sense an environment in a second direction.

In an embodiment of this application, the first lidar may be disposed on the first side of the vehicle. In this way, data collected by the lidar on the first side of the vehicle may compensate for a blind area caused by a lidar on a front side of the vehicle, thereby helping improve safety performance of the vehicle. In addition, the first lidar is controlled by the first flip component to sense the environment in the first direction or the second direction. This helps reduce a quantity of lidars on the vehicle, thereby helping reduce vehicle costs.

In some possible implementations, the lidar system further includes a lidar disposed on a front side of the vehicle.

In some possible implementations, a range of a blind area of the lidar disposed on the front side of the vehicle is greater than a range of a blind area of the first lidar.

In some possible implementations, a distance measurement capability of the lidar disposed on the front side of the vehicle is greater than a distance measurement capability of the first lidar.

In some possible implementations, distance measurement precision of the lidar disposed on the front side of the vehicle is less than distance measurement precision of the first lidar.

In some possible implementations, the lidar disposed on the front side of the vehicle is a long-range lidar.

In some possible implementations, the first lidar is a short-range lidar.

In an embodiment of this application, the short-range lidar may be disposed on the first side of the vehicle. In this way, data collected by the short-range lidar on the first side may be used to identify a person, an animal, or another obstacle that is relatively close to the vehicle, thereby helping improve safety performance of the vehicle.

With reference to the first aspect, in some implementations of the first aspect, the lidar system further includes a second lidar, and a second flip component, configured to connect the second lidar to a second side of the vehicle. When the second flip component flips to a third position, the second lidar is configured to sense the environment in the first direction; or when the second flip component flips to a fourth position, the second lidar is configured to sense the environment in the second direction.

In an embodiment of this application, the second lidar may be disposed on the second side of the vehicle. In this way, data collected by lidars on the first side and the second side of the vehicle may further compensate for the blind area caused by the lidar on the front side of the vehicle, thereby further improving safety performance of the vehicle. In addition, the second lidar is controlled by the second flip component to sense the environment in the first direction or the second direction. This helps reduce a quantity of lidars on the vehicle, thereby helping reduce vehicle costs.

In some possible implementations, the second lidar is a short-range lidar.

With reference to the first aspect, in some implementations of the first aspect, the first lidar and the second lidar are symmetrical about a center line in a width direction of the vehicle.

In an embodiment of this application, the first lidar and the second lidar may be symmetrical about the center line in the width direction of the vehicle, so that aesthetics of the vehicle can be ensured.

With reference to the first aspect, in some implementations of the first aspect, the first lidar and the second lidar are respectively disposed on rear view mirrors on the first side and the second side; or the first lidar and the second lidar are respectively disposed on wheel arches on the first side and the second side; or the first lidar and the second lidar are respectively disposed on B pillars on the first side and the second side; or the first lidar and the second lidar are respectively disposed on door handles on the first side and the second side.

In an embodiment of this application, the first lidar and the second lidar may be respectively disposed on rear view mirrors, wheel arches, B pillars, or door handles on the first side and the second side. In such an arrangement, impact on a vehicle appearance caused when lidars are disposed on sides of the vehicle can be mitigated. In addition, the first lidar and the second lidar are respectively controlled by a first flip mechanism and a second flip mechanism to flip. A sense of black technology can be brought to a user.

With reference to the first aspect, in some implementations of the first aspect, the lidar system further includes a third lidar, disposed at the rear of the vehicle.

In an embodiment of this application, the third lidar may be disposed at the rear of the vehicle. In this way, in a process in which the vehicle travels backward (for example, parking), data collected by the third lidar is used to sense an environment. This helps improve safety performance of the vehicle.

In some possible implementations, the third lidar is a short-range lidar.

In an embodiment of this application, the short-range lidar may be disposed at the rear of the vehicle. In this way, in the process in which the vehicle travels backward (for example, parking), data collected by the short-range lidar may be used to identify a person, an animal, or another obstacle (for example, a parking lock or a pole) that is relatively close to the vehicle. This helps improve safety performance of the vehicle.

With reference to the first aspect, in some implementations of the first aspect, the lidar system further includes a fourth lidar, disposed at the rear of the vehicle. The third lidar and the fourth lidar are respectively disposed on two sides of a rear license plate of the vehicle; or the third lidar and the fourth lidar are disposed on a rear wing of the vehicle; or the third lidar and the fourth lidar are disposed on an upper side or a lower side of a rear license plate of the vehicle.

In an embodiment of this application, the third lidar and the fourth lidar are separately disposed at the rear of the vehicle. Point cloud data collected by the third lidar and the fourth lidar may cover an entire backward blind area of the vehicle. This helps improve safety performance of the vehicle.

In some possible implementations, the fourth lidar is a short-range lidar.

With reference to the first aspect, in some implementations of the first aspect, the lidar system further includes a control apparatus, configured to obtain an instruction. The instruction instructs the first lidar to sense the environment in the first direction or the second direction. The control apparatus is further configured to control, according to the instruction, the first flip component to flip.

With reference to the first aspect, in some implementations of the first aspect, the first direction is a direction in which the vehicle travels forward, and the second direction is a direction in which the vehicle travels backward.

According to a second aspect, a control method is provided. The method includes: obtaining an instruction; and controlling, according to the instruction, a first flip component to flip, where the first flip component connects a first lidar to a first side of a vehicle. When the first flip component flips to a first position, the first lidar is configured to sense an environment in a first direction; or when the first flip component flips to a second position, the first lidar is configured to sense an environment in a second direction.

In an embodiment of this application, the first lidar may be disposed on the first side of the vehicle. In this way, data collected by the lidar on the first side of the vehicle may compensate for a blind area caused by a lidar on a front side of the vehicle, thereby helping improve safety performance of the vehicle. In addition, the first lidar is controlled by the first flip component to sense the environment in the first direction or the second direction. This helps reduce a quantity of lidars on the vehicle, thereby helping reduce vehicle costs.

In some possible implementations, the first lidar is a short-range lidar.

In an embodiment of this application, the short-range lidar may be disposed on the first side of the vehicle. In this way, data collected by the short-range lidar on the first side may be used to identify a person, an animal, or another obstacle that is relatively close to the vehicle, thereby helping improve safety performance of the vehicle.

With reference to the second aspect, in some implementations of the second aspect, the instruction includes a traveling status of the vehicle. The controlling, according to the instruction, a first flip component to flip includes: when the traveling status indicates that the vehicle travels forward, controlling the first flip component to flip to the first position, where the first direction is a direction in which the vehicle travels forward; or when the traveling status indicates that the vehicle travels backward, controlling the first flip component to flip to the second position, where the second direction is a direction in which the vehicle travels backward.

In an embodiment of this application, the second lidar may be disposed on the second side of the vehicle. In this way, data collected by lidars on the first side and the second side of the vehicle may further compensate for the blind area caused by the lidar on the front side of the vehicle, thereby further improving safety performance of the vehicle. In addition, the second lidar is controlled by the second flip component to sense the environment in the first direction or the second direction. This helps reduce a quantity of lidars on the vehicle, thereby helping reduce vehicle costs.

In some possible implementations, the second lidar is a short-range lidar.

With reference to the second aspect, in some implementations of the second aspect, the method further includes controlling, according to the control instruction, a second flip component to flip, where the second flip component connects a second lidar to a second side of the vehicle. When the second flip component flips to a third position, the second lidar is configured to sense the environment in the first direction; or when the second flip component flips to a fourth position, the second lidar is configured to sense the environment in the second direction.

With reference to the second aspect, in some implementations of the second aspect, the method further includes performing image composition based on point cloud data collected by the first lidar.

In some possible implementations, the first lidar is a short-range lidar, and the vehicle further includes another sensor (for example, a long-range lidar or a photographing apparatus). The performing image composition based on point cloud data collected by the first lidar includes performing image composition based on point cloud data collected by the short-range lidar and data collected by the another sensor.

According to a third aspect, a control apparatus is provided. The control apparatus includes: an obtaining unit, configured to obtain an instruction, and a control unit, configured to control, according to the instruction, a first flip component to flip, where the first flip component connects a first lidar to a first side of a vehicle. When the first flip component flips to a first position, the first lidar is configured to sense an environment in a first direction; or when the first flip component flips to a second position, the first lidar is configured to sense an environment in a second direction.

In some possible implementations, the first lidar is a short-range lidar.

With reference to the third aspect, in some implementations of the third aspect, the instruction includes a traveling status of the vehicle. The control unit is specifically configured to: when the traveling status indicates that the vehicle travels forward, control the first flip component to flip to the first position, where the first direction is a direction in which the vehicle travels forward; or when the traveling status indicates that the vehicle travels backward, control the first flip component to flip to the second position, where the second direction is a direction in which the vehicle travels backward.

With reference to the third aspect, in some implementations of the third aspect, the control unit is further configured to control, according to the control instruction, a second flip component to flip, where the second flip component connects a second lidar to a second side of the vehicle. When the second flip component flips to a third position, the second lidar is configured to sense the environment in the first direction; or when the second flip component flips to a fourth position, the second lidar is configured to sense the environment in the second direction.

In some possible implementations, the second lidar is a short-range lidar.

With reference to the third aspect, in some implementations of the third aspect, the apparatus further includes an image composition unit, configured to perform image composition based on point cloud data collected by the first lidar.

According to a fourth aspect, an apparatus is provided. The apparatus includes a processing unit and a storage unit. The storage unit is configured to store instructions. The processing unit executes the instructions stored in the storage unit, so that the apparatus performs any possible method according to the second aspect.

Optionally, the processing unit may include at least one processor. The storage unit may be a memory. The memory may be a storage unit (for example, a register or a cache) in a chip, or may be a storage unit (for example, a read-only memory or a random access memory) located outside a chip in a vehicle.

According to a fifth aspect, a system is provided. The system includes the lidar system according to the first aspect and the apparatus according to the third aspect or the fourth aspect.

According to a sixth aspect, a vehicle is provided. The vehicle includes the lidar system according to the first aspect, or the vehicle includes the apparatus according to the third aspect or the fourth aspect, or the vehicle includes the system according to the fifth aspect.

According to a seventh aspect, a computer program product is provided. The computer program product includes computer program code, and when the computer program code is run on a computer, the computer is enabled to perform any possible method according to the second aspect.

It should be noted that all or some of the computer program code may be stored in a first storage medium. The first storage medium may be encapsulated together with a processor, or may be encapsulated separately from a processor. This is not specifically limited in embodiments of this application.

According to an eighth aspect, a computer-readable medium is provided. The computer-readable medium stores program code, and when the computer program code is run on a computer, the computer is enabled to perform any possible method according to the second aspect.

According to a ninth aspect, an embodiment of this application provides a chip system. The chip system includes a processor, configured to invoke a computer program or computer instructions stored in a memory, so that the processor performs any possible method according to the second aspect.

With reference to the ninth aspect, in a possible implementation, the processor is coupled to the memory through an interface.

With reference to the ninth aspect, in a possible implementation, the chip system further includes a memory, and the memory stores a computer program or computer instructions.

### BRIEF DESCRIPTION OF DRAWINGS

FIG. 1 is a schematic diagram of functional blocks of a vehicle according to an embodiment of this application;
FIG. 2 is a schematic diagram of an arrangement and a blind area of a long-range lidar;
FIG. 3 is a schematic diagram of arrangements of a long-range lidar and a short-range lidar and a field of view of the short-range lidar according to an embodiment of this application;
FIG. 4 is a schematic diagram of another arrangement of a long-range lidar and another arrangement of a short-range lidar, and another field of view of the short-range lidar according to an embodiment of this application;
FIG. 5(a) to FIG. 5(e) are a schematic diagram of an arrangement of a short-range lidar on a rear view mirror according to an embodiment of this application;
FIG. 6(a) and FIG. 6(b) are a process of controlling, by using a worm drive, a short-range lidar to flip forward or backward according to an embodiment of this application;
FIG. 7 is a schematic diagram of an arrangement of a short-range lidar on a B pillar of a vehicle according to an embodiment of this application;
FIG. 8 is a schematic diagram of an arrangement of a short-range lidar on a wheel arch of a vehicle according to an embodiment of this application;
FIG. 9 is a schematic diagram of an arrangement of a short-range lidar on a door handle of a vehicle according to an embodiment of this application;
FIG. 10 is a schematic diagram of an arrangement of short-range lidars on a side of a bus body according to an embodiment of this application;
FIG. 11 is a schematic diagram of an arrangement of short-range lidars on a side of a truck body according to an embodiment of this application;
FIG. 12 is a schematic diagram of an arrangement of short-range lidars on two sides of a rear license plate of a vehicle according to an embodiment of this application;
FIG. 13 is a schematic diagram of an arrangement of short-range lidars above a rear license plate of a vehicle according to an embodiment of this application;
FIG. 14 is a schematic diagram of an arrangement of short-range lidars on a rear wing according to an embodiment of this application;
FIG. 15 is a schematic flowchart of a control method according to an embodiment of this application;
FIG. 16 is a schematic diagram of an external structure of a direct time of flight DTOF lidar according to an embodiment of this application;
FIG. 17 is a schematic diagram of an internal structure of a DTOF lidar according to an embodiment of this application;
FIG. 18 is a schematic block diagram of a lidar system according to an embodiment of this application;
FIG. 19 is a schematic diagram of an application scenario according to an embodiment of this application;
FIG. 20 is another schematic flowchart of a control method according to an embodiment of this application; and
FIG. 21 is a schematic block diagram of a control apparatus according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes merely an association relationship for describing associated objects and indicates that three relationships may exist. For example, A and/or B may indicate the following three cases: Only A exists, both A and B exist, and only B exists.

In embodiments of this application, modifiers such as "first" and "second" are merely intended to distinguish between different described objects, but are not intended to limit positions, a sequence, priorities, quantities, content, or the like of the described objects. In embodiments of this application, a modifier, like an ordinal number, used to distinguish between described objects does not constitute a limitation on the described objects. For descriptions of the described objects, refer to the descriptions of the context in the claims or the embodiments. Such a modifier should not constitute an unnecessary limitation. In the descriptions of embodiments, unless otherwise specified, "a plurality of" means two or more.

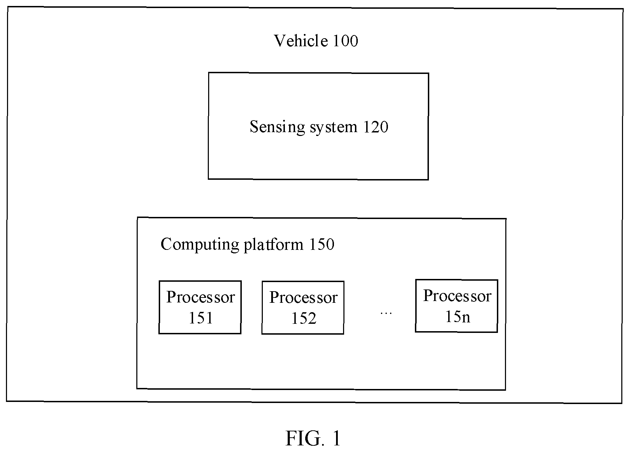

FIG. 1 is a schematic diagram of functional blocks of a vehicle 100 according to an embodiment of this application. The vehicle 100 may include a sensing system 120 and a computing platform 150. The sensing system 120 may include one or more sensors that sense information about an environment around the vehicle 100. For example, the sensing system 120 may include a positioning system. The positioning system may be a global positioning system (global positioning system, GPS), or may be a BeiDou system or another positioning system, or an inertial measurement unit (inertial measurement unit, IMU). For another example, the sensing system 120 may further include one or more of an eye tracker, a lidar, a millimeter-wave radar, an ultrasonic radar, and a photographing apparatus. Lidars may be further classified into long-range lidars and short-range lidars.

Some or all functions of the vehicle 100 are controlled by the computing platform 150. The computing platform 150 may include one or more processors, for example, processors 151 to 15n (n is a positive integer). The processor is a circuit having a signal processing capability. In an implementation, the processor may be a circuit having instruction reading and running capabilities, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural processing unit (neural processing unit, NPU), a tensor processing unit (tensor processing unit, TPU), or a deep learning processing unit (deep learning processing unit, DPU). In addition, the computing platform 150 may further include a memory. The memory is configured to store instructions, and some or all of the processors 151 to 15n may invoke the instructions in the memory and execute the instructions, to implement a corresponding function.

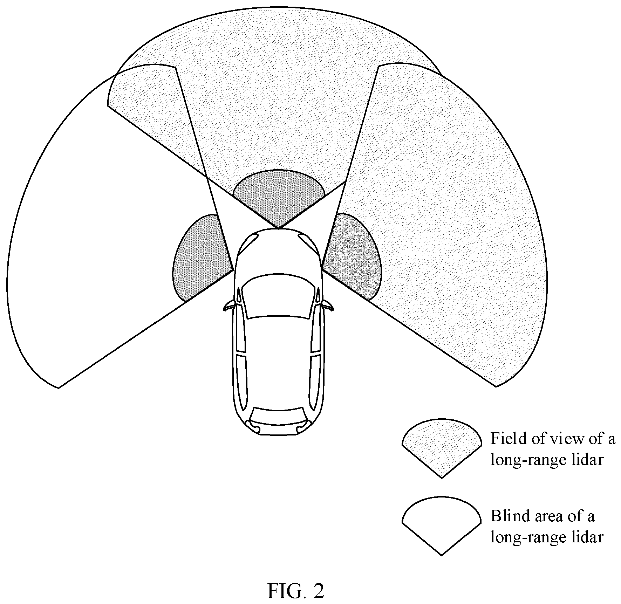

FIG. 2 is a schematic diagram of an arrangement position and a blind area of a long-range lidar. Three long-range lidars are disposed in the middle of a grille and disposed on two sides of a front bumper, respectively. Currently, a long-range lidar in the market has a blind area of 0 meters to 0.6 meters. In this way, point cloud data collected by the long-range lidar cannot be used to determine a position of an object that is ahead of a vehicle and that is relatively close to the vehicle. In addition, the long-range lidars cannot cover blind areas of each other, and there is also a blind area at a cross position of the long-range lidars. Sizes of the blind areas are related to installation positions of the long-range lidars. Due to the blind area, the vehicle cannot detect an animal (for example, a cat or a dog) or a squatting person that is relatively close to the vehicle. This may cause a safety accident of the vehicle and affect safety performance of the vehicle.

For an arrangement solution of the long-range lidars in FIG. 2, when the vehicle is parked (for example, parked in a narrow parking space and parked in a stereoscopic garage), it is difficult to park the vehicle only by relying on data collected by a rear view camera and an ultrasonic radar. Due to the blind area, when the vehicle is parked, the vehicle cannot detect a person, a parking lock, and another obstacle that affect parking on two sides of the vehicle or at the rear of the vehicle. This may affect parking experience of a user.

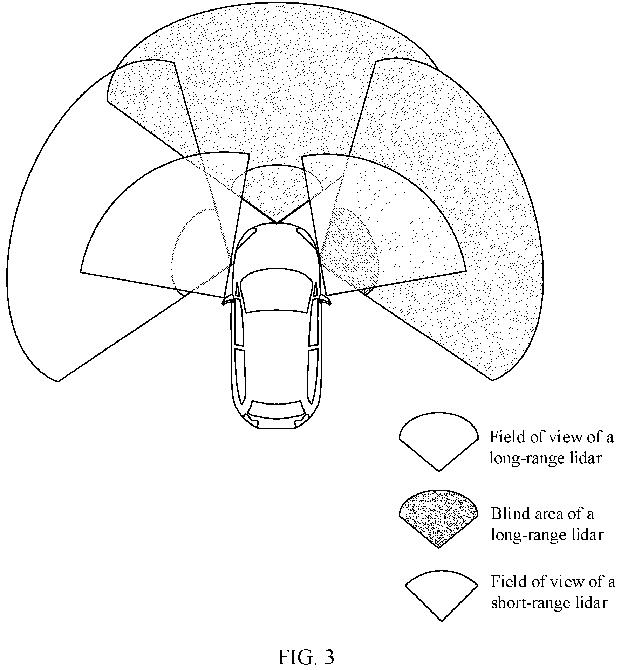

FIG. 3 is a schematic diagram of arrangement positions of a long-range lidar and a short-range lidar and a field of view of the short-range lidar according to an embodiment of this application. As shown in FIG. 3, two short-range lidars that are configured to sense an environment ahead of a vehicle are disposed on sides of a vehicle body, so that a blind area when the vehicle travels forward may be compensated. This helps avoid a safety accident caused because a long-range lidar cannot detect an object at a short distance, and helps improve safety performance of the vehicle. For example, safety of the vehicle when parked out of a parking space can be improved.

In an embodiment, the two short-range lidars may be respectively disposed on rear view mirrors, or the two short-range lidars may be respectively disposed on two sides of a front bumper.

In FIG. 3 and some of the following embodiments, an example in which a lidar disposed on a side of the vehicle body is a short-range lidar is used for description. Embodiments of this application are not limited thereto. For example, the lidar disposed on the side of the vehicle body may also be a long-range lidar, and the long-range lidar may also compensate for a blind area of a lidar on a front side of the vehicle. For another example, a range of the blind area of the lidar disposed on the front side of the vehicle is greater than a range of a blind area of the lidar disposed on the side of the vehicle. For another example, a distance measurement capability of the lidar disposed on the front side of the vehicle is greater than a distance measurement capability of the lidar disposed on the side of the vehicle. For another example, distance measurement precision of the lidar disposed on the front side of the vehicle is less than distance measurement precision of the lidar disposed on the side of the vehicle.

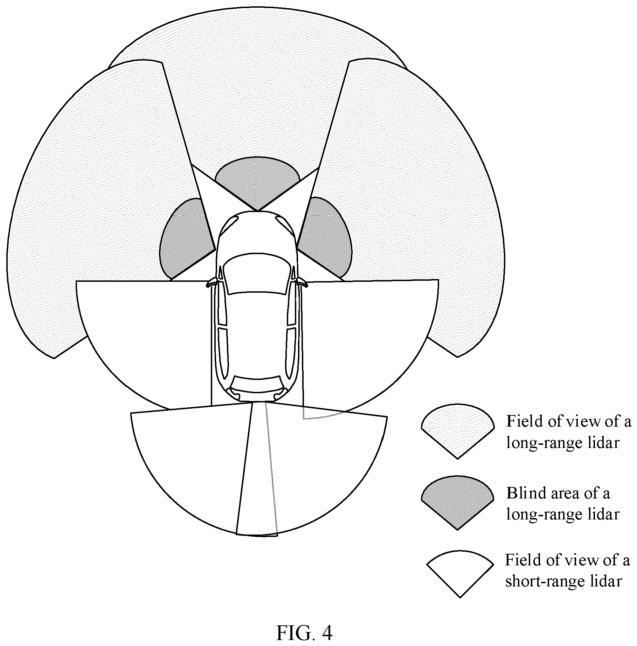

FIG. 4 is a schematic diagram of another arrangement position of a long-range lidar and another arrangement position of a short-range lidar, and a field of view of the short-range lidar according to an embodiment of this application. As shown in FIG. 4, four short-range lidars that are configured to sense an environment behind a vehicle are disposed on sides and disposed at the rear of a vehicle body, so that a blind area when the vehicle travels backward may be compensated. This helps improve safety performance of the vehicle during parking, thereby helping improve parking experience of a user.

In an embodiment, two of the four short-range lidars may be respectively disposed on rear view mirrors, and the other two may be respectively disposed on two sides of a rear license plate of the vehicle.

In FIG. 4, an example in which four short-range lidars that are configured to sense the environment behind the vehicle are disposed is used for description. A quantity of short-range lidars is not limited in embodiments of this application. For example, three short-range lidars that are configured to sense the environment behind the vehicle may alternatively be disposed on the sides and disposed at the rear of the vehicle body. Two of the three short-range lidars may be respectively disposed on rear view mirrors, and the other one may be disposed at the rear of the vehicle body (for example, an upper side or a lower side of the rear license plate of the vehicle).

The foregoing describes, by using an arrangement solution shown in FIG. 3, that two short-range lidars that are configured to sense the environment ahead of the vehicle are disposed on the sides of the vehicle body, and describes, by using an arrangement solution shown in FIG. 4, that four short-range lidars that are configured to sense the environment behind the vehicle are disposed on the sides and disposed at the rear of the vehicle body. The two short-range lidars shown in FIG. 3 and FIG. 4 disposed on the sides of the vehicle body may be same lidars. For example, flip components may be disposed on the sides of the vehicle body. The flip components may control the short-range lidars to flip forward or backward, to separately sense an environment ahead of and an environment behind the vehicle by using same short-range lidars. This helps reduce vehicle costs.

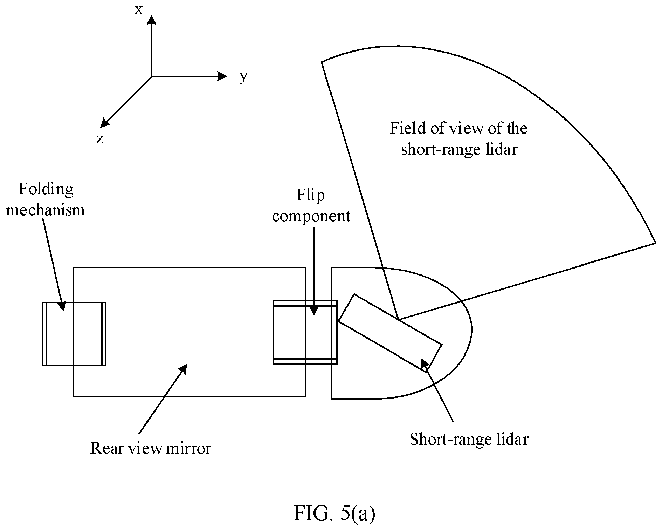

The following uses an example in which a short-range lidar is disposed on a rear view mirror for description. FIG. 5(a) to FIG. 5(e) are a schematic diagram of an arrangement of a short-range lidar on a rear view mirror according to an embodiment of this application.

For example, in a top view shown FIG. 5(a), the rear view mirror may include a folding mechanism 510, a flip component 520, and a short-range lidar 530. An X axis direction is a direction of a vertical axis of a vehicle, a Y axis direction is a direction of a horizontal axis of the vehicle, and a Z axis direction is a height direction of the vehicle. A forward direction (or a positive direction) of the X axis may be a direction in which the vehicle travels forward, and a reverse direction (or a negative direction) of the X axis may be a direction in which the vehicle travels backward.

The folding mechanism 510 is configured to fold the rear view mirror. For example, a user may adjust, by rotating a knob of the rear view mirror, the rear view mirror to be in an expanded state or a folded state. For another example, when an operation of locking the vehicle by the user is detected, the rear view mirror may be controlled, by the folding mechanism 510, to be in the folded state; or when an operation of unlocking the vehicle by the user is detected, the rear view mirror may be controlled, by the folding mechanism 510, to be in the expanded state.

The flip component 520 is configured to control the short-range lidar 530 to flip forward or backward. For example, when the vehicle needs to travel backward, the vehicle may control, by using the flip component 520, the short-range lidar 530 to flip backward, to sense an environment behind the vehicle by using data collected by the short-range lidar 530. The short-range lidar 530 in FIG. 5(a) is currently in a flipping state 1. In the flipping state 1, the data collected by the short-range lidar 530 may be used to compensate for a blind area in FIG. 2 when the vehicle travels forward.

That the short-range lidar 530 is in the flipping state 1 may also be understood as that a horizontal field of view (field of view, FOV) of the short-range lidar corresponds to the forward direction of the X axis.

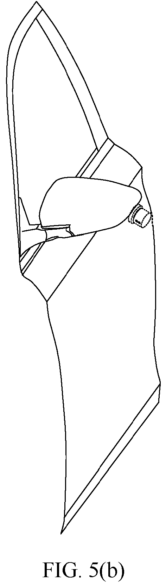

For example, FIG. 5(b) shows another view of the short-range lidar in the flipping state 1.

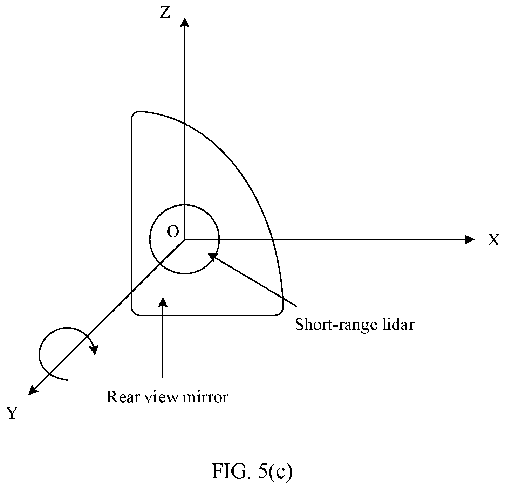

For example, in a side view shown in FIG. 5(c), when the vehicle needs to travel forward, the vehicle may control, by using the flip component 520, the short-range lidar 530 to flip clockwise or counter-clockwise by 180° along the Y axis direction (or along an XOZ plane), so that the short-range lidar 530 flips backward.

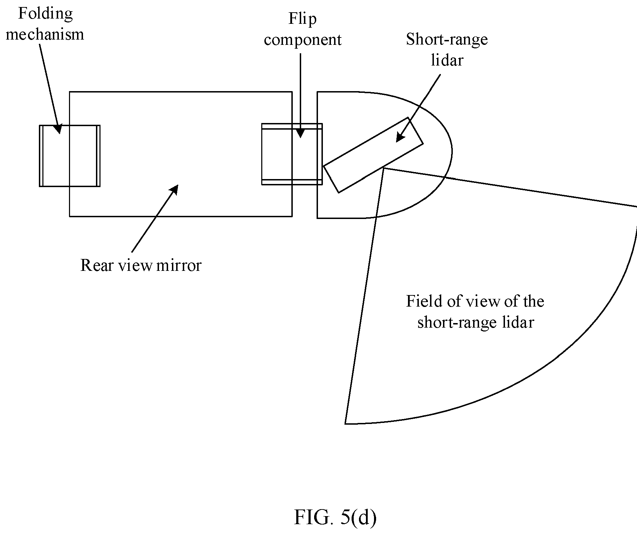

In another top view shown in FIG. 5(d), the short-range lidar 530 is controlled by the flip component 520 to flip backward, so that the vehicle may sense the environment behind the vehicle by using the data collected by the short-range lidar 530.

For example, the short-range lidar 530 in FIG. 5(d) is currently in a flipping state 2. In the flipping state 2 and the flipping state 1, FOVs of the short-range lidar 530 may have a symmetric relationship. In the flipping state 2, data collected by the short-range lidar 530 may be used to compensate for a blind area in FIG. 2 when the vehicle travels backward.

That the short-range lidar 530 is currently in the flipping state 2 may also be understood as that the horizontal field of view (field of view, FOV) of the short-range lidar corresponds to the reverse direction of the X axis.

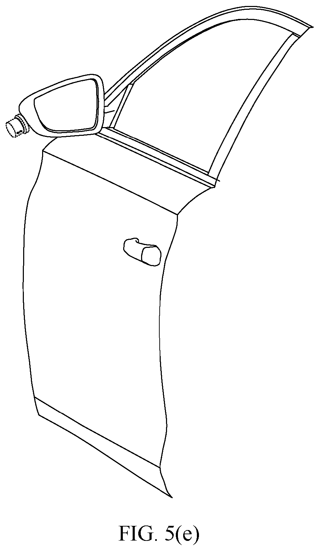

For example, FIG. 5(e) shows another view of the short-range lidar in the flipping state 2.

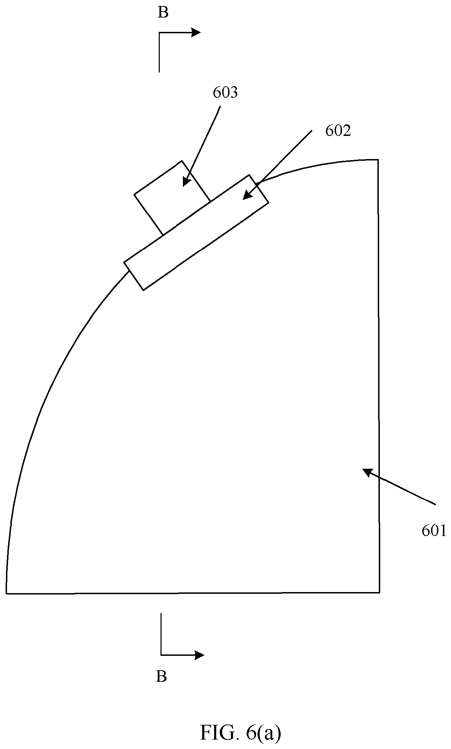

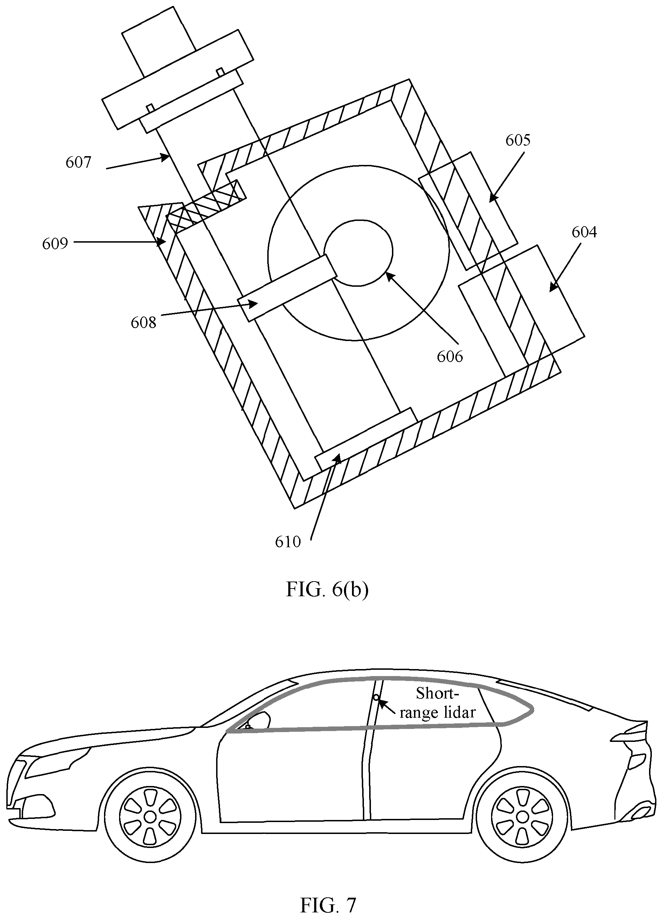

For example, with reference to FIG. 6(a) and FIG. 6(b), the following describes a process of controlling, by using a worm drive, a short-range lidar to flip forward or flip backward. FIG. 6(a) and FIG. 6(b) are a schematic diagram of an arrangement of a short-range lidar on a rear view mirror according to an embodiment of this application. The flip component 520 may be a flippable mechanism 602.

For example, in a schematic diagram of a planar structure shown in FIG. 6(a), the flippable mechanism 602 is disposed on a rear view mirror 601 of a vehicle, and a short-range lidar 603 is disposed on the flippable mechanism 602. The short-range lidar 603 may be connected to the flippable mechanism 602 through fastening.

For example, FIG. 6(b) is a B-B sectional view of FIG. 6(a). The flippable mechanism 602 may include a drive motor 604, a reducer assembly 605, and a rotation shaft 607. The drive motor 604 is connected to the rotation shaft 607 by the reducer assembly 605. The reducer assembly 605 includes a first gear wheel and a second gear wheel (not shown in the figure) that are synchronously transmitted and that are disposed on a transmission shaft 606. An output shaft of the drive motor 604 is connected to the first gear wheel, and the second gear wheel is engaged with an external gear wheel 608 disposed on an outer surface of the rotation shaft 607 to form a worm drive. The flippable mechanism 602 is driven, by using the worm drive, to rotate, thereby controlling the short-range lidar 603 to flip forward or backward.

In an embodiment, the flippable mechanism 602 may further include a bearing 609 and a bearing 610, configured to support the flippable mechanism 602.

In FIG. 6(a) and FIG. 6(b), the short-range lidar is controlled, by using the worm drive, to flip forward or backward. This is not specifically limited in embodiments of this application. The lidar may alternatively be controlled, by using other transmission manners, to flip forward or backward.

For example, the flip component 520 may alternatively be a motor. The short-range lidar may be controlled by the motor to rotate around a Y axis, to sense an environment ahead of or behind the vehicle.

In FIG. 5(a) to FIG. 5(e) and FIG. 6(a) and FIG. 6(b), a manual rear view mirror or an electric rear view mirror with a mirror is used as an example for description. A type of the rear view mirror is not specifically limited in embodiments of this application. For example, the rear view mirror may alternatively be an electronic rear view mirror.

With reference to FIG. 5(a) to FIG. 5(e) and FIG. 6(a) and FIG. 6(b), the foregoing describes a solution of disposing the short-range lidar on the rear view mirror. Embodiments of this application are not limited thereto. The short-range lidar may alternatively be disposed at another position on a side of the vehicle.

FIG. 7 is a schematic diagram of an arrangement of a short-range lidar on a B pillar of a vehicle according to an embodiment of this application.

In an embodiment, short-range lidars may be respectively disposed on a B pillar on a left side and a B pillar on a rear side of a vehicle.

In an embodiment, the short-range lidars may alternatively be disposed on A pillars of the vehicle, or the short-range lidars may be disposed on C pillars of the vehicle, or the short-range lidars may be disposed on D pillars of the vehicle.

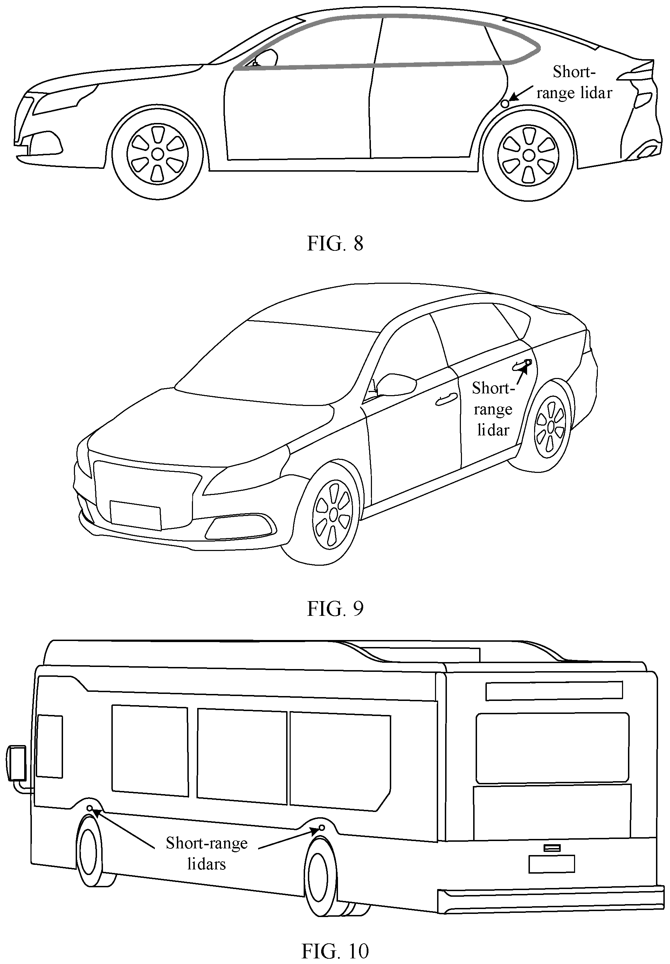

FIG. 8 is a schematic diagram of an arrangement of a short-range lidar on a wheel arch of a vehicle according to an embodiment of this application.

In an embodiment, short-range lidars may be disposed on front wheel arches of the vehicle, or short-range lidars may be disposed on rear wheel arches of the vehicle.

In an embodiment, a short-range lidar may be disposed on a front wheel arch on a left side of the vehicle, and a short-range lidar may be disposed on a front wheel arch on a right side of the vehicle.

In an embodiment, a short-range lidar may be disposed on a rear wheel arch on a left side of the vehicle, and a short-range lidar may be disposed on a rear wheel arch on a right side of the vehicle.

FIG. 9 is a schematic diagram of an arrangement of a short-range lidar on a door handle of a vehicle according to an embodiment of this application. In an embodiment, short-range lidars may be disposed on rear door handles, or may be disposed on front door handles.

In an embodiment, a short-range lidar may be disposed on a rear door handle on a left side of the vehicle, and a short-range lidar may be disposed on a rear door handle on a right side of the vehicle.

In an embodiment, a short-range lidar may be disposed on a front door handle on a left side of the vehicle, and a short-range lidar may be disposed on a front door handle on a right side of the vehicle.

In an embodiment, short-range lidars may alternatively be disposed on fenders on sides of the vehicle.

In the foregoing arrangement manners in FIG. 7 to FIG. 9, the flip component may be connected to the short-range lidar, and the short-range lidar is driven by the flip component to flip forward or backward, to sense an environment ahead of or behind the vehicle.

In FIG. 7 to FIG. 9, a car is used as an example for description. Embodiments of this application are not limited thereto. For example, the short-range lidar arrangement solution in embodiments of this application may be further applied to a bus, a truck, or another type of vehicle.

FIG. 10 is a schematic diagram of an arrangement of short-range lidars on a side of a bus body according to an embodiment of this application. In consideration of a relatively long bus body, in this case, short-range lidars are respectively disposed on a front wheel arch and a rear wheel arch of the bus. This can ensure that in a process in which the bus travels forward, point cloud data collected by the short-range lidars on the front wheel arch and the rear wheel arch can compensate for a blind area in which the bus travels forward. This helps avoid a safety accident caused because a long-range lidar cannot detect an object at a short distance, and helps improve safety performance of the bus. For example, safety of the bus when the bus is parked out of a parking space can be improved.

In a process in which the bus travels backward, the point cloud data collected by the short-range lidars on the front wheel arch and the rear wheel arch may compensate for the blind area when the bus travels backward. For example, safety performance of the bus during parking can be improved.

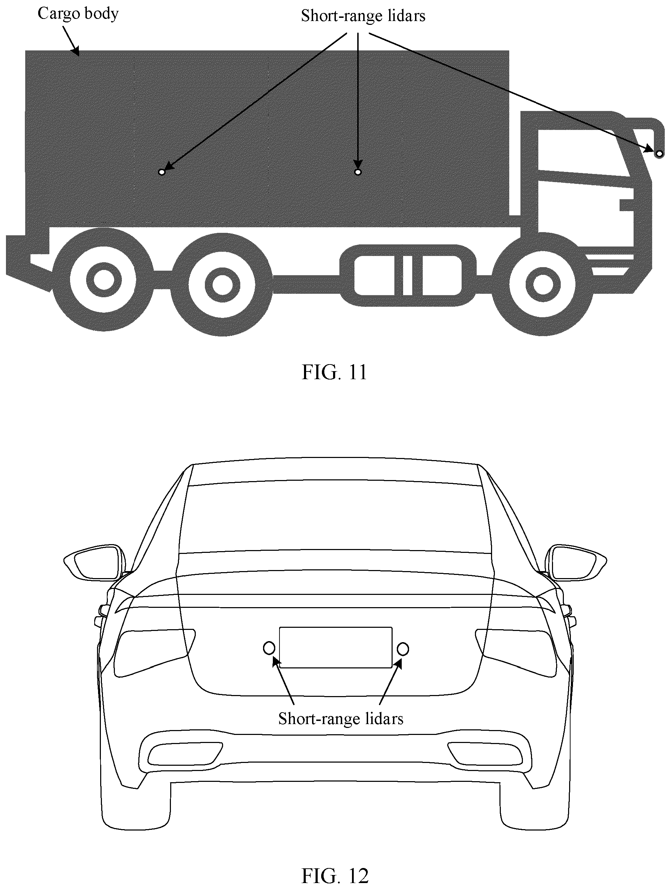

FIG. 11 is a schematic diagram of an arrangement of short-range lidars on a side of a truck body according to an embodiment of this application. For a truck with a relatively long vehicle body (for example, a vehicle body length of a truck may reach 17 meters), short-range lidars may be respectively disposed on a rear view mirror and at different positions of a side cargo body of the truck.

The short-range lidars provided in embodiments of this application may alternatively be disposed at another position at the rear of a vehicle.

FIG. 12 is a schematic diagram of an arrangement of short-range lidars on two sides of a rear license plate of a vehicle according to an embodiment of this application.

In an embodiment, short-range lidars on two sides of the rear license plate of the vehicle are symmetrical about a center line in a width direction of the vehicle.

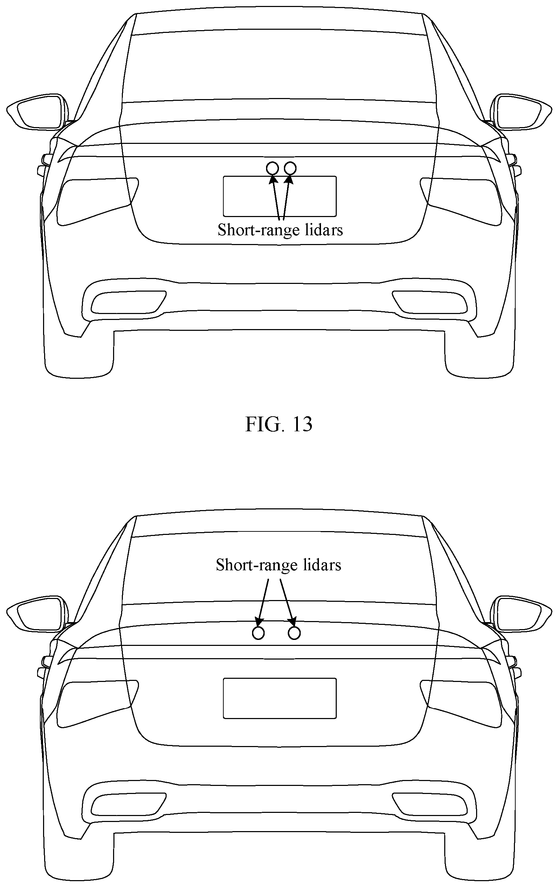

FIG. 13 is a schematic diagram of an arrangement of short-range lidars above a rear license plate of a vehicle according to an embodiment of this application.

FIG. 14 is a schematic diagram of an arrangement of short-range lidars on a rear wing according to an embodiment of this application.

In FIG. 12 to FIG. 14, an example in which two short-range lidars are disposed at the rear of the vehicle is used for description. A quantity of short-range lidars at the rear of the vehicle is not specifically limited in embodiments of this application. For example, one short-range lidar may be disposed at the rear of the vehicle. For example, one short-range lidar is disposed on a left side or a right side of the rear license plate, or one short-range lidar is disposed on an upper side or a lower side of the rear license plate, or one short-range lidar is disposed on the rear wing.

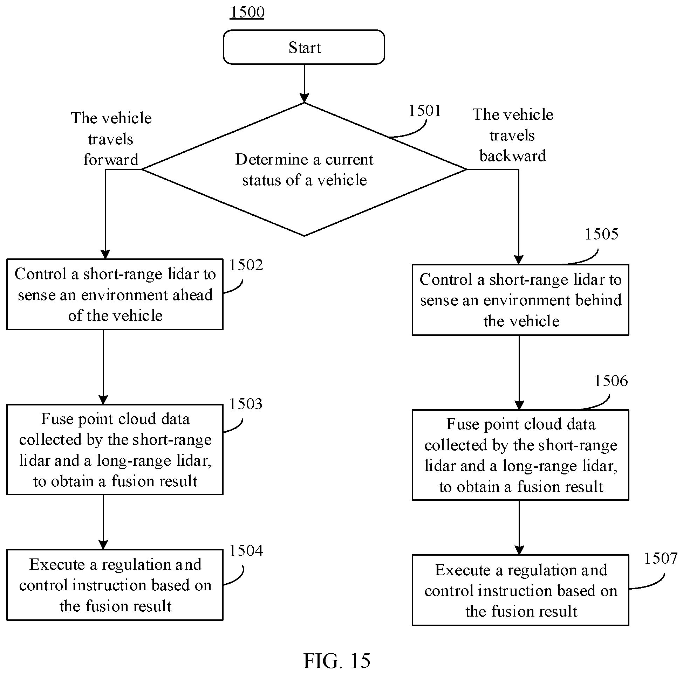

FIG. 15 is a schematic flowchart of a control method 1500 according to an embodiment of this application. The method 1500 includes the following steps.

S1501: Determine a current status of a vehicle.

In an embodiment, the current status of the vehicle includes traveling forward or traveling backward.

For example, the current status of the vehicle may be determined by using a gear of the vehicle. When the vehicle detects an operation of engaging a D gear by a user, it may be determined that the current status of the vehicle is traveling forward. When the vehicle detects an operation of engaging an R gear by the user, it may be determined that the current status of the vehicle is traveling backward.

When it is determined that the vehicle travels forward, steps S1502 to S1504 may be performed. When it is determined that the vehicle travels backward, steps S1505 to S1507 may be performed.

S1502: Control a short-range lidar to sense an environment ahead of the vehicle.

For example, when it is determined that the vehicle travels forward, the short-range lidar may be controlled by the flip component to flip forward. For example, when determining, by using data collected by a gear sensor, that the current status of the vehicle is traveling forward, a computing platform may control the drive motor (or the motor) to work, to control a short-range lidar on a rear view mirror to flip forward and enter the flipping state 1.

S1503: Fuse data collected by the short-range lidar and another sensor, to obtain a fusion result.

In an embodiment, a fusion module may fuse point cloud data collected by the short-range lidar, point cloud data collected by a long-range lidar, image data collected by a photographing apparatus (for example, a surround view camera), and point cloud data collected by a millimeter-wave radar or a centimeter-wave radar, to obtain a fusion result.

S1504: Execute a regulation and control instruction based on the fusion result.

After obtaining the fusion result, the fusion module may send the fusion result to a regulation and control module, so that the regulation and control module performs a corresponding operation.

For example, the regulation and control module includes but is not limited to an automatic emergency brake (automatic emergency brake, AEB) module and an adaptive cruise control (adaptive cruise control, ACC) module.

For example, the executing a regulation and control instruction based on the fusion result includes: when it is determined, based on the fusion result, that there is an object (for example, an animal or a squatting person) near the vehicle body, controlling the vehicle to perform braking or avoidance.

In this embodiment of this application, the fusion result is determined based on the point cloud data collected by the short-range lidar and the point cloud data collected by the long-range lidar. This can compensate for a blind area caused by point cloud data collected only by a long-range lidar. This avoids a safety accident caused because a long-range lidar and a photographing apparatus cannot detect an object or a person that is relatively close to a vehicle, thereby helping improve vehicle safety.

S1505: Control a short-range lidar to sense an environment behind the vehicle.

For example, when it is determined that the vehicle travels backward, the short-range lidar may be controlled by the flip component to flip backward. For example, when determining, by using data collected by a gear sensor, that the current status of the vehicle is traveling backward, a computing platform may control the drive motor (or the motor) to work, to control a short-range lidar on a rear view mirror to flip backward and enter the flipping state 2.

S1506: Fuse data collected by the short-range lidar and another sensor, to obtain a fusion result.

In an embodiment, a fusion module may fuse point cloud data collected by the short-range lidar, point cloud data collected by a long-range lidar, an image captured by a photographing apparatus (for example, a surround view camera), and point cloud data collected by a millimeter-wave radar or a centimeter-wave radar, to obtain a fusion result.

In an embodiment, in a process in which the vehicle travels forward or backward, image composition may be performed based on data collected by the short-range lidar and the another sensor.

For example, the vehicle may perform simultaneous localization and mapping (simultaneous localization and mapping, SLAM) by using point cloud data collected by the short-range lidar and the long-range lidar, and image data collected by the photographing apparatus.

S1507: Execute a regulation and control instruction based on the fusion result.

For example, the executing a regulation and control instruction based on the fusion result includes: in a vehicle parking process, when it is determined, based on the fusion result, that there is an object (for example, an animal or a squatting person), a parking lock, or another obstacle (for example, a pole) near the vehicle body, controlling the vehicle to perform braking or avoidance.

In this embodiment of this application, the current status of the vehicle is determined, so that the short-range lidar can be controlled to sense an environment ahead of or behind the vehicle. This helps compensate for a blind area caused by a long-range lidar and improve accuracy of sensing an environment around the vehicle, thereby helping improve vehicle safety. In addition, the environment ahead of or behind the vehicle can be sensed by using the flip component and the short-range lidar. This helps reduce a quantity of short-range lidars disposed on the vehicle, thereby helping reduce vehicle costs.

The following describes the short-range lidar in embodiments of this application with reference to the accompanying drawings.

For example, the short-range lidar may be a direct time of flight (direct time of flight, DTOF) lidar.

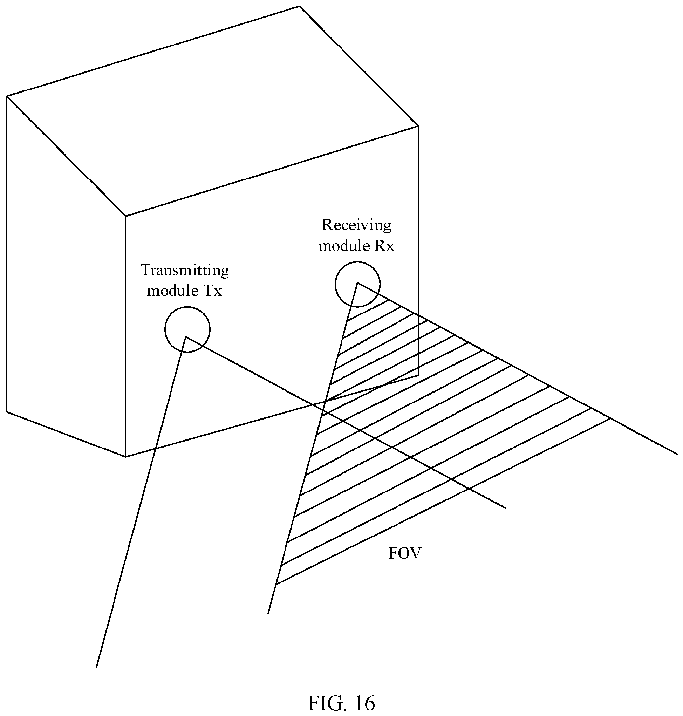

For example, FIG. 16 is a schematic diagram of an external structure of a DTOF lidar according to an embodiment of this application.

The DTOF lidar may measure a distance from 5 m to 10 m. Distance measurement precision may reach 3 cm to 5 cm. Horizontal and vertical resolutions may be determined based on an actual scenario requirement. A blind area of the DTOF lidar is within 5 cm to 15 cm and is less than a blind area of 60 cm of a long-range lidar. A horizontal FOV and a vertical FOV may be determined based on the actual scenario requirement. This can meet requirements for vehicle layout and restoration of a field of view. For example, Table 1 shows a correspondence between a parameter and a parameter value of the DTOF lidar.

**Table 1**

| Parameter | Parameter value |
|---|---|
| Distance measurement capability | 5 m to 50 m |
| Distance measurement precision | 3 cm to 5 cm |
| Blind area | 5 cm to 15 cm |
| Horizontal FOV | 90° to 180° |
| Vertical FOV | 25° to 90° |

The correspondence between the parameter and the parameter value listed in Table 1 is merely an example. This is not specifically limited in embodiments of this application.

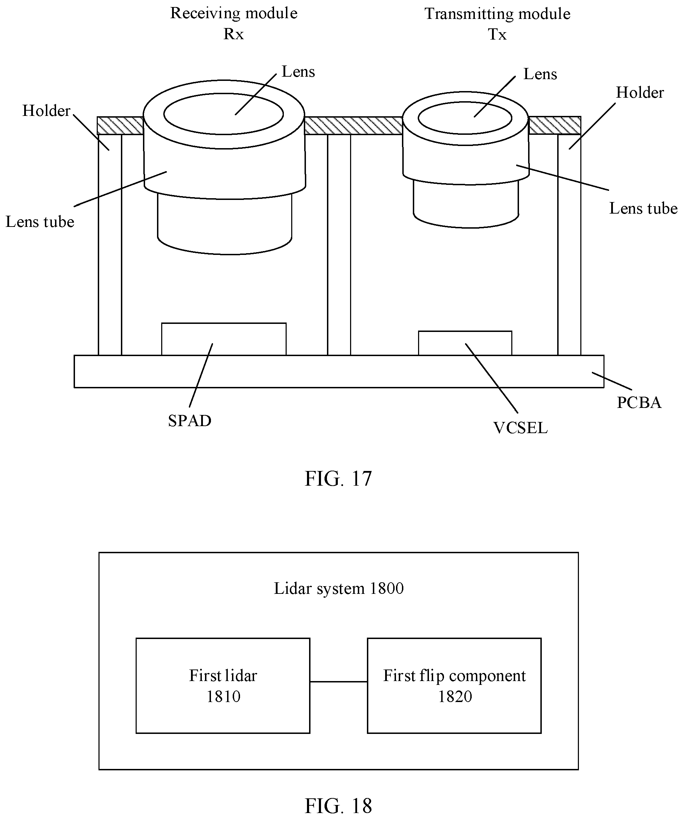

FIG. 17 is a schematic diagram of an internal structure of a DTOF lidar according to an embodiment of this application. As shown in FIG. 17, the DTOF lidar includes a vertical-cavity surface-emitting laser (vertical-cavity surface-emitting laser, VCSEL), a TX module, a single-photon avalanche diode (single-photon avalanche diode, SPAD), an RX module, a holder holder, a printed circuit board assembly (printed circuit board assembly, PCBA), and the like. A detection principle of the DTOF lidar is to measure a distance based on a time of fly (time of fly, TOF) principle. The advantages of the DTOF lidar are precise distance measurement, short response time, and multi-object synchronous detection.

The foregoing is described by using an example in which the short-range lidar is a DTOF lidar. A type of the short-range lidar is not specifically limited in embodiments of this application. For example, the short-range lidar may alternatively be a mechanical lidar, an optical phased array (optical phased array, OPA) lidar, or the like.

FIG. 18 is a schematic block diagram of a lidar system 1800 according to an embodiment of this application. As shown in FIG. 18, the lidar system 1800 includes: a first lidar 1810, and a first flip component 1820, configured to connect the first lidar 1810 to a first side of a vehicle. When the first flip component 1820 flips to a first position, the first lidar 1810 is configured to sense an environment in a first direction; or when the first flip component 1820 flips to a second position, the first lidar 1810 is configured to sense an environment in a second direction.

Optionally, the first lidar is a long-range lidar or a short-range lidar.

For example, the first lidar is a long-range lidar. In this way, data collected by the long-range lidar on the first side may compensate for a blind area caused by a lidar on a front side of the vehicle, thereby helping improve safety performance of the vehicle.

For example, the first lidar is a short-range lidar. In this way, data collected by the short-range lidar on the first side may compensate for a blind area caused by a lidar on a front side of the vehicle. In addition, data collected by the short-range lidar on the first side may be used to identify a person, an animal, or another obstacle that is relatively close to the vehicle, thereby helping improve safety performance of the vehicle.

Optionally, the first side is a left side of the vehicle, and the second side is a right side of the vehicle; or the first side is a right side of the vehicle, and the second side is a left side of the vehicle.

The first flip component 1820 and the first lidar 1810 may be connected through fastening, or may be connected by another apparatus (or component).

Optionally, the first direction may be a direction in which the vehicle travels forward (for example, a forward direction of an X axis). In this way, when the first flip component 1820 flips to the first position, the first lidar 1810 may sense an environment in a direction in which the vehicle travels forward.

That the first lidar may sense an environment in a direction in which the vehicle travels forward may also be understood as that a horizontal FOV of the first lidar corresponds to the forward direction of the X axis.

Optionally, the second direction may be a direction in which the vehicle travels backward (for example, a reverse direction of the X axis). In this way, when the first flip component 1820 flips to the second position, the first lidar 1810 may sense an environment in a direction in which the vehicle travels backward.

That the first lidar may sense an environment in a direction in which the vehicle travels backward may also be understood as that the horizontal FOV of the first lidar corresponds to the reverse direction of the X axis.

The foregoing is described by using an example in which the first direction is a direction in which the vehicle travels forward and the second direction is a direction in which the vehicle travels backward. Embodiments of this application are not limited thereto. For example, the first direction may alternatively be a direction in which the vehicle moves along a forward direction of the Y axis, and the second direction may alternatively be a direction in which the vehicle moves along a reverse direction of the Y axis.

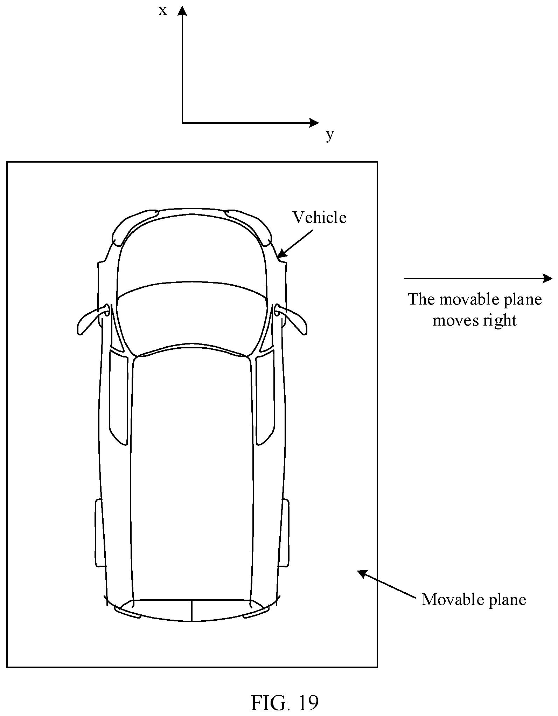

FIG. 19 is a schematic diagram of an application scenario according to an embodiment of this application. As shown in FIG. 19, the vehicle is located on a movable plane. When the movable plane moves right, the vehicle moves along the forward direction of a Y axis. In this case, the first flip component 1820 may flip to the first position, so that the first lidar 1810 senses an environment on a right side of the vehicle; or when the movable plane moves left, the vehicle moves along the reverse direction of the Y axis. In this case, the first flip component 1820 may flip to the second position, so that the first lidar 1810 senses an environment on a left side of the vehicle.

Optionally, the lidar system further includes a second lidar, and a second flip component, configured to connect the second lidar to a second side of the vehicle. When the second flip component flips to a third position, the second lidar is configured to sense the environment in the first direction; or when the second flip component flips to a fourth position, the second lidar is configured to sense the environment in the second direction.

Optionally, the second lidar is a long-range lidar or a short-range lidar.

For example, the first lidar and the second lidar may be short-range lidars. In this way, when the vehicle travels forward, point cloud data collected by the short-range lidars can compensate for a blind area caused by a long-range lidar. This helps avoid a safety accident caused because the long-range lidar cannot detect an object at a short distance, and helps improve safety performance of the vehicle. When the vehicle travels backward (for example, parking), the point cloud data collected by the short-range lidars is used, so that safety performance during parking can be improved, thereby helping improve parking experience of the user.

Optionally, the first lidar and the second lidar are symmetrical about a center line in a width direction of the vehicle.

The width direction of the vehicle may also be understood as a direction of a horizontal axis of the vehicle.

In this embodiment of this application, the first lidar and the second lidar are symmetrical about the center line in the width direction of the vehicle, so that aesthetics of the vehicle can be ensured.

Optionally, the first lidar and the second lidar are respectively disposed on rear view mirrors on the first side and the second side.

For example, as shown in FIG. 5(b) or FIG. 5(e), the first lidar and the second lidar may be respectively disposed on rear view mirrors on the left side and the right side of the vehicle.

Optionally, the first lidar and the second lidar are respectively disposed on wheel arches on the first side and the second side.

For example, as shown in FIG. 8, the first lidar and the second lidar may be respectively disposed on rear wheel arches on the left side and the right side of the vehicle.

Optionally, the first lidar and the second lidar are respectively disposed on B pillars on the first side and the second side.

For example, as shown in FIG. 7, the first lidar and the second lidar may be respectively disposed on B pillars on the left side and the right side of the vehicle.

Optionally, the first lidar and the second lidar are respectively disposed on door handles on the first side and the second side.

For example, as shown in FIG. 9, the first lidar and the second lidar may be respectively disposed on door handles on the left side and the right side of the vehicle.

Optionally, the lidar system further includes a third lidar, and the third lidar is disposed at the rear of the vehicle.

Optionally, the third lidar is a long-range lidar or a short-range lidar.

Optionally, the lidar system further includes a fourth lidar, and the fourth lidar is disposed at the rear of the vehicle. The third lidar and the fourth lidar are respectively disposed on two sides of a rear license plate of the vehicle; or the third lidar and the fourth lidar are disposed on a rear wing of the vehicle; or the third lidar and the fourth lidar are disposed on an upper side or a lower side of a rear license plate of the vehicle.

Optionally, the fourth lidar is a long-range lidar or a short-range lidar.

For example, as shown in FIG. 12, the third lidar and the fourth lidar are respectively disposed on two sides of the rear license plate of the vehicle.

For example, as shown in FIG. 13, the third lidar and the fourth lidar are disposed on an upper side of the rear license plate of the vehicle.

For example, as shown in FIG. 14, the third lidar and the fourth lidar are disposed on the rear wing of the vehicle.

Optionally, the lidar system further includes a control apparatus, configured to obtain an instruction. The instruction is used to control the first lidar to sense the environment in the first direction or the second direction. The control apparatus is further configured to control, according to the instruction, the first flip component to flip.

Optionally, the first direction is a direction in which the vehicle travels forward, and the second direction is a direction in which the vehicle travels backward.

For example, the control apparatus may be the computing platform 150, or the control apparatus may be a system-on-a-chip (system-on-a-chip, SOC) in the computing platform 150, or the control apparatus may be a processor in the computing platform, or the control apparatus may be a vehicle controller, or the control apparatus may be a zone controller (zone controller) of the vehicle, or the control apparatus may be a microcontroller unit (microcontroller unit, MCU) in the zone controller.

For example, the zone controller may include a vehicle integration unit (vehicle integration unit, VIU).

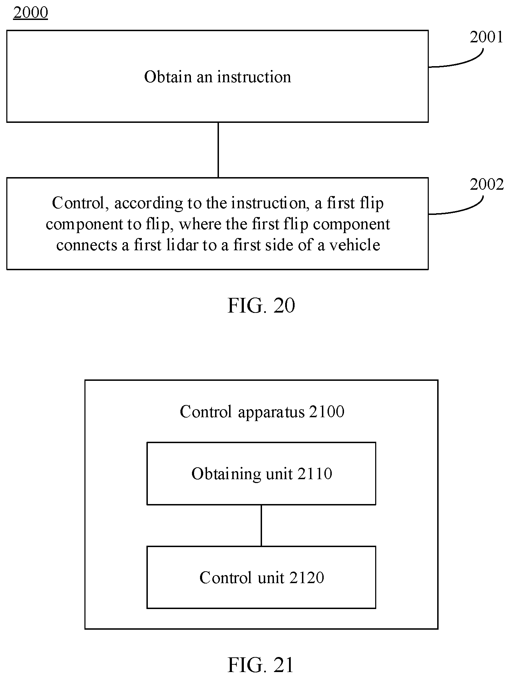

FIG. 20 is a schematic flowchart of a control method 2000 according to an embodiment of this application. The control method 2000 may be performed by the foregoing vehicle, or the control method may be performed by the foregoing computing platform 150, or the control method 2000 may be performed by the SOC in the computing platform, or the control method 2000 may be performed by the processor in the computing platform, or the control method 2000 may be performed by the vehicle controller, or the control method 2000 may be performed by the zone controller of the vehicle, or the control method 2000 may be performed by the MCU in the zone controller. As shown in FIG. 20, the method 2000 may include:

S2001: Obtain an instruction.

Optionally, the instruction includes a traveling status of the vehicle. For example, data collected by a gear sensor may be used to obtain the traveling status of the vehicle.

Optionally, the instruction includes a flip angle of a first flip component. For example, the instruction instructs the first flip component to rotate clockwise by 180° or rotate counter-clockwise by 180° along the XOZ plane shown in FIG. 5(c).

S2002: Control, according to the instruction, a first flip component to flip, where the first flip component connects a first lidar to a first side of a vehicle. When the first flip component flips to a first position, the first lidar is configured to sense an environment in a first direction; or when the first flip component flips to a second position, the first lidar is configured to sense an environment in a second direction.

Optionally, the first lidar is a long-range lidar or a short-range lidar.

For the foregoing descriptions of the first direction and the second direction, refer to the descriptions in the foregoing embodiments. Details are not described herein again.

For example, when the vehicle detects an operation of engaging an R gear by a user, the first flip component may be controlled to flip to the second position, so that an environment in a direction in which the vehicle travels backward (or a parking direction) is sensed. When the vehicle is powered off, the first flip component may be kept at the second position. When the vehicle is powered on and detects an operation of engaging a D gear by the user, the first flip component may be controlled to flip to the first position, so that an environment in a direction in which the vehicle travels forward is sensed.

Optionally, the instruction includes a traveling status of the vehicle. The controlling, according to the instruction, a first flip component to flip includes: when the traveling status indicates that the vehicle travels forward, controlling the first flip component to flip to the first position, where the first direction is a direction in which the vehicle travels forward; or when the traveling status indicates that the vehicle travels backward, controlling the first flip component to flip to the second position, where the second direction is a direction in which the vehicle travels backward.

For example, the computing platform may obtain a signal collected by the gear sensor, to determine current gear information of the vehicle. When the computing platform determines that a current gear of the vehicle is the D gear, the computing platform may control the first flip mechanism to flip to the first position, so that the first lidar senses an environment in a direction in which the vehicle travels forward; or when the computing platform determines that a current gear of the vehicle is the R gear, the computing platform may control the first flip mechanism to flip to the second position, so that the first lidar senses an environment in a direction in which the vehicle travels backward.

Optionally, the method 2000 further includes: controlling, according to the control instruction, a second flip component to flip, where the second flip component connects a second lidar to a second side of the vehicle. When the second flip component flips to a third position, the second lidar is configured to sense the environment in the first direction; or when the second flip component flips to a fourth position, the second lidar is configured to sense the environment in the second direction.

Optionally, the second lidar is a long-range lidar or a short-range lidar.

Optionally, the method 2000 further includes performing image composition based on point cloud data collected by the first lidar.

Optionally, the performing image composition based on point cloud data collected by the first lidar includes performing image composition based on the point cloud data collected by the first lidar and data collected by another sensor.

For example, the data collected by the another sensor includes but is not limited to point cloud data collected by a long-range lidar, point cloud data collected by a millimeter-wave radar, or image data collected by a camera.

An embodiment of this application provides a control apparatus for implementing any one of the foregoing methods. For example, a control apparatus is provided and the control apparatus includes units (or means) configured to implement steps performed by the vehicle in any one of the foregoing methods.

FIG. 21 is a schematic block diagram of a control apparatus 2100 according to an embodiment of this application. As shown in FIG. 21, the control apparatus 2100 includes: an obtaining unit 2110, configured to obtain an instruction, and a control unit 2120, configured to control, according to the instruction, a first flip component to flip, where the first flip component connects a first lidar to a first side of a vehicle. When the first flip component flips to a first position, the first lidar is configured to sense an environment in a first direction; or when the first flip component flips to a second position, the first lidar is configured to sense an environment in a second direction.

Optionally, the first lidar is a long-range lidar or a short-range lidar.

Optionally, the instruction includes a traveling status of the vehicle. The control unit 2120 is specifically configured to: when the traveling status indicates that the vehicle travels forward, control the first flip component to flip to the first position, where the first lidar is configured to sense an environment in a direction in which the vehicle travels forward; or when the traveling status indicates that the vehicle travels backward, control the first flip component to flip to the second position, where the first lidar is configured to sense an environment in a direction in which the vehicle travels backward.

Optionally, the second lidar is a long-range lidar or a short-range lidar.

Optionally, the control unit 2120 is further configured to control, according to the control instruction, a second flip component to flip, where the second flip component connects a second lidar to a second side of the vehicle. When the second flip component flips to a third position, the second lidar is configured to sense the environment in the first direction; or when the second flip component flips to a fourth position, the second lidar is configured to sense the environment in the second direction.

Optionally, the apparatus further includes an image composition unit, configured to perform image composition based on point cloud data collected by the first lidar.

For example, the obtaining unit 2110 may be implemented by the processor 151 in the computing platform. The processor 151 may obtain gear information collected by a gear sensor.

For example, the control unit 2120 may be implemented by a processor 152 in the computing platform. When the gear information indicates that the vehicle is currently in a D gear, the processor 152 may control the first flip component to flip to the first position, so that a horizontal FOV of the first lidar corresponds to the direction in which the vehicle travels forward. The processor 152 may further control the second flip component to flip to the third position, so that a horizontal FOV of the second lidar corresponds to the direction in which the vehicle travels forward.

Functions implemented by the obtaining unit 2110 and the control unit 2120 may be implemented by different processors in the computing platform, or may be implemented by a same processor in the computing platform. This is not limited in embodiments of this application.

It should be understood that division of units in the apparatus is merely logical function division. During actual implementation, all or some of the units may be integrated into one physical entity or may be physically separated. In addition, units in the apparatus may be implemented in a form of software invoked by a processor. For example, the apparatus includes a processor. The processor is connected to a memory, the memory stores instructions, and the processor invokes the instructions stored in the memory, to implement any one of the foregoing methods or functions of the units in the apparatus. The processor is, for example, a general-purpose processor, like a CPU or a microprocessor. The memory is a memory inside the apparatus or a memory outside the apparatus. Alternatively, the units in the apparatus may be implemented in a form of hardware circuit, and functions of some or all units may be implemented by designing the hardware circuit. The hardware circuit may be understood as one or more processors. For example, in an implementation, the hardware circuit is an ASIC, and functions of some or all of the units are implemented by designing a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement functions of some or all of the foregoing units. All the units of the foregoing apparatus may be implemented in a form of software invoked by a processor, or may be implemented in a form of hardware circuit, or some of the units are implemented in a form of software invoked by a processor, and the remaining units are implemented in a form of hardware circuit.

In embodiments of this application, the processor is a circuit having a signal processing capability. In an implementation, the processor may be a circuit having instruction reading and running capabilities, for example, a CPU, a microprocessor, a GPU, or a DSP. In another implementation, the processor may implement a specific function by using a logical relationship of a hardware circuit, and the logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated and implemented in a form of system-on-a-chip (system-on-a-chip, SOC). The SOC may include at least one processor, configured to implement any one of the foregoing methods or implement functions of the units of the apparatus. Types of the at least one processor may be different. For example, the at least one processor includes a CPU, an FPGA, a CPU, an artificial intelligence processor, a CPU, a GPU, and the like.

An embodiment of this application further provides an apparatus. The apparatus includes a processing unit and a storage unit. The storage unit is configured to store instructions, and the processing unit executes the instruction stored in the storage unit, so that the apparatus performs the methods or steps performed in the foregoing embodiments.

Optionally, if the apparatus is located in a vehicle, the processing unit may be the processors 151 to 15n shown in FIG. 1.

An embodiment of this application further provides a vehicle. The vehicle may include the lidar system 1800 and/or the control apparatus 2100.

An embodiment of this application further provides a computer program product, where the computer program product includes computer program code. When the computer program code is run on a computer, the computer is enabled to perform the foregoing methods.

An embodiment of this application further provides a computer-readable medium, where the computer-readable medium stores program code. When the computer program code is run on a computer, the computer is enabled to perform the foregoing methods.

In an implementation process, steps in the foregoing methods can be implemented by using a hardware integrated logical circuit in the processor, or by using instructions in a form of software. The methods disclosed with reference to embodiments of this application may be directly performed by a hardware processor, or may be performed by a combination of hardware in the processor and a software module. The software module may be located in a mature storage medium in the art like a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware in the processor. To avoid repetition, details are not described herein.

It should be understood that, in an embodiment of this application, the memory may include a read-only memory and a random access memory and provide instructions and data for the processor.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or may be not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lidar system, comprising:
a first lidar; and
a first flip component, configured to connect the first lidar to a first side of a vehicle, wherein
when the first flip component flips to a first position, the first lidar is configured to sense an environment in a first direction; or
when the first flip component flips to a second position, the first lidar is configured to sense an environment in a second direction.

2. The lidar system according to claim 1, wherein the lidar system further comprises:
a second lidar; and
a second flip component, configured to connect the second lidar to a second side of the vehicle, wherein
when the second flip component flips to a third position, the second lidar is configured to sense the environment in the first direction; or
when the second flip component flips to a fourth position, the second lidar is configured to sense the environment in the second direction.

3. The lidar system according to claim 2, wherein the first lidar and the second lidar are symmetrical about a center line in a width direction of the vehicle.

4. The lidar system according to claim 2 or 3, wherein
the first lidar and the second lidar are respectively disposed on rear view mirrors on the first side and the second side; or
the first lidar and the second lidar are respectively disposed on wheel arches on the first side and the second side; or
the first lidar and the second lidar are respectively disposed on B pillars on the first side and the second side; or
the first lidar and the second lidar are respectively disposed on door handles on the first side and the second side.

5. The lidar system according to any one of claims 1 to 4, wherein the lidar system further comprises:
a third lidar, disposed at the rear of the vehicle.

6. The lidar system according to claim 5, wherein the lidar system further comprises:
a fourth lidar, disposed at the rear of the vehicle, wherein
the third lidar and the fourth lidar are respectively disposed on two sides of a rear license plate of the vehicle; or
the third lidar and the fourth lidar are disposed on a rear wing of the vehicle; or
the third lidar and the fourth lidar are disposed on an upper side or a lower side of a rear license plate of the vehicle.

7. The lidar system according to any one of claims 1 to 6, wherein the lidar system further comprises:
a control apparatus, configured to obtain an instruction, wherein the instruction instructs the first lidar to sense the environment in the first direction or the second direction; and
the control apparatus is further configured to control, according to the instruction, the first flip component to flip.

8. The lidar system according to any one of claims 1 to 7, wherein the first direction is a direction in which the vehicle travels forward, and the second direction is a direction in which the vehicle travels backward.

9. The lidar system according to any one of claims 1 to 8, wherein the first lidar is a short-range lidar.

10. A vehicle, comprising the lidar system according to any one of claims 1 to 9.
